# EUROPEAN PATENT SPECIFICATION

(11) **EP 3 277 944 B1**
(45) Date of publication and mention of the grant of the patent: **11.12.2019**
(21) Application number: 16712169.8
(22) Date of filing: 18.03.2016
(51) Int. Cl.: F02D 35/02, G07C 5/00, G07C 5/08

(54) **KNOCK SENSOR NETWORK SYSTEMS AND METHODS FOR CHARACTERIZING NOISES**
KLOPFSENSORNETZWERKSYSTEME UND -VERFAHREN ZUR CHARAKTERISIERUNG VON GERÄUSCHEN
SYSTÈMES DE RÉSEAU DE CAPTEURS DE CLIQUETIS ET PROCÉDÉS POUR CARACTÉRISER DES BRUITS

(30) Priority: 01.04.2015 US 201514676733
(43) Date of publication of application: 07.02.2018
(73) Proprietor: AI ALPINE US BIDCO INC., Wilmington, Delaware 19801 (US)
(72) Inventor: BIZUB, Jeffrey Jacob, Waukesha, WI 53188 (US)
(74) Representative: Torggler & Hofinger Patentanwälte
(86) International application number: PCT/US2016/023133
(87) International publication number: WO 2016/160374

(56) References cited:
- EP-A1- 3 040 540
- WO-A1-2013/023046
- WO-A1-2014/116197
- DE-A1-102013 203 943
- US-A- 5 821 412
- VULLI S ET AL: "Time-frequency analysis of single-point engine-block vibration measurements for multiple excitation-event identification", JOURNAL OF SOUND & VIBRATION, LONDON, GB, vol. 321, no. 3-5, 10 April 2009 (2009-04-10), pages 1129-1143, XP025960863, ISSN: 0022-460X, DOI: 10.1016/J.JSV.2008.10.011 [retrieved on 2008-11-28]
- Zhong Zhang ET AL: "New Diagnostic Method of Knocking in a Spark-Ignition Engine Using the Wavelet Transform", SAE Technical Paper Series, 22 June 2000 (2000-06-22), XP055270621, Retrieved from the Internet: URL:http://papers.sae.org/2000-01-1801/ [retrieved on 2016-05-04]

## Description

### BACKGROUND

The subject matter disclosed herein relates to knock sensors, and more specifically, to networked knock sensors suitable for characterizing certain noises.

Engines, such as combustion engines, typically combust a carbonaceous fuel, such as natural gas, gasoline, diesel, and the like, and use the corresponding expansion of high temperature and pressure gases to apply a force to certain components of the engine, e.g., piston disposed in a cylinder, to move the components over a distance. Each cylinder may include one or more valves that open and close correlative with combustion of the carbonaceous fuel. For example, an intake valve may direct an oxidizer such as air into the cylinder, which is then mixed with fuel and combusted. Combustion fluids, e.g., hot gases, may then be directed to exit the cylinder via an exhaust valve. Accordingly, the carbonaceous fuel is transformed into mechanical motion, useful in driving a load. For example, the load may be a generator that produces electric power.

Knock sensors can be used to monitor multi-cylinder combustion engines. A knock sensor can be mounted to the exterior of an engine cylinder and used to determine whether or not the engine is running as desired. Sometimes a knock sensor detects a noise that may not be identifiable at the time. It would be desirable to have a way to characterize the noise.

Document WO 2013/023046 A1 discloses a method of analyzing a cyclo-mechanical engine by detecting an engine signal associated with a plurality of cycles of the engine.

Document WO 2014/116197A1 discloses an apparatus that includes a vibration sensor that provides an indication of vibration in a motorized vehicle

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

The invention is defined in the independent claims. Variations are described in the dependent claims.

In a first aspect, method of analyzing a noise signal includes receiving, via a local engine control unit (ECU), a noise signal sensed by a knock sensor disposed in a reciprocating device. The method further includes processing the noise signal via at least one of the local ECU, a remote ECU, or an external system. The processing includes preconditioning the noise signal to derive a preconditioned noise signal, and applying an ADSR envelope to the preconditioned noise signal. The processing additionally includes extracting tonal information from the preconditioned noise signal and creating a fingerprint of the noise signal based on the ADSR envelope, the tonal information, or a combination thereof.

In a second aspect, a system includes an engine controller configured to control a reciprocating device. The controller has a processor configured to receive a noise signal sensed by a knock sensor configured to be disposed in the reciprocating device. The processor is additionally configured to create a local fingerprint based on the noise signal, transmit the noise signal to a second engine controller to receive a remote fingerprint from the external engine controller, or a combination thereof. The processor is further configured to classify an engine issue by applying the local fingerprint, the remote fingerprint, or the combination thereof.

In a third aspect, a non-transitory computer readable medium includes executable instructions that when executed cause a processor to receive a noise signal sensed by a knock sensor configured to be disposed in the reciprocating device. The instructions are further configured to cause the processor to create a local fingerprint based on the noise signal, transmit the noise signal to a second engine controller to receive a remote fingerprint from the external engine controller, or a combination thereof. The instructions are additionally configured to cause the processor to classify an engine issue by applying the local fingerprint, the remote fingerprint, or the combination thereof.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a portion of an engine driven power generation system with networked engine control units (ECUs) in accordance with aspects of the present disclosure;
FIG. 2 is a side cross-sectional view of an embodiment of a piston assembly within a cylinder of the reciprocating engine shown in FIG. 1 in accordance with aspects of the present disclosure;
FIG. 3 is an embodiment of an engine noise plot of data measured by the knock sensor shown in FIG. 2 in accordance with aspects of the present disclosure;
FIG. 4 is an embodiment of a scaled version of the sample engine noise plot shown in FIG. 3 in accordance with aspects of the present disclosure;
FIG. 5 is an embodiment of a sample scaled engine noise plot shown in FIG. 4 with four principle parameters of an attack, decay, sustain, release (ADSR) envelope overlaid in accordance with aspects of the present disclosure;
FIG. 6 is an embodiment of a scaled engine noise plot and ASDR envelope shown in FIG. 5 with the extracted tones overlaid in accordance with aspects of the present disclosure;
FIG. 7 is a flow chart showing an embodiment of a process for characterizing a noise in accordance with aspects of the present disclosure;
FIG. 8 is a flow chart showing an embodiment of a process for identifying a fingerprint shown in FIG. 7 in accordance with aspects of the present disclosure; and
FIG. 9 is a flow chart showing an embodiment of a process suitable for local and/or remote processing of noise data.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

When using a knock sensor to monitor a reciprocating device (e.g., a combustion engine), occasionally the knock sensor system records a noise, such as an abnormal or undesired noise that may not be identified at that time. Rather than ignore and discard the unidentifiable noises, it may be advantageous to save recordings of unidentifiable noises for analysis at a later date. However, having a log of uncharacterized unidentifiable noises that cannot be sorted greatly reduces the utility of the data set. As such, it would be beneficial to characterize and/or categorize the collected unidentifiable noises so they can be more easily analyzed, thus making future (or current) analysis of the noises easier.

Advantageously, the techniques described herein may create a sound "fingerprint" of certain engine sounds or noise. The sound fingerprint may be analyzed and/or stored in one or more locations of a network, including one or more engine control units (ECUs) and/or external computing systems, such as cloud-based systems, workstations, mainframes, laptops, notebooks, tablets, cell phones, and the like. As described in further detail below, networked systems and method are provided for identifying and classifying noise via an Attack-Decay-Sustain-Release (ASDR) envelope and/or joint time-frequency techniques. The joint time-frequency techniques may include cepstrum techniques, quefrency techniques, chirplet techniques, and/or wavelet techniques to develop an acoustic model or fingerprint of the unknown noise, as described in more detail below.

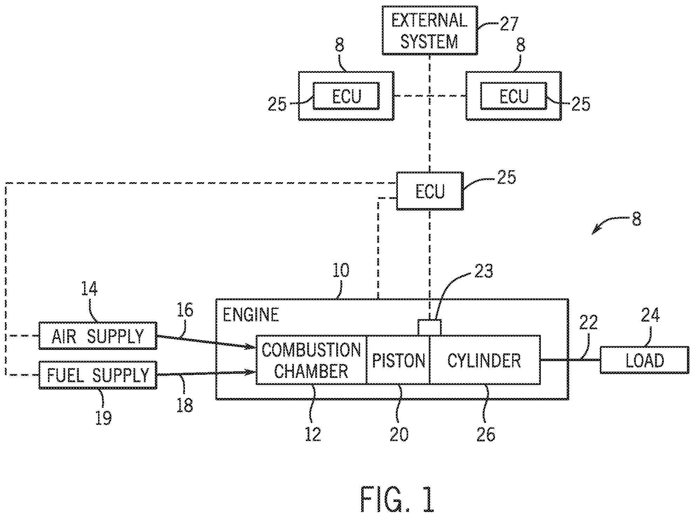

Turning to the drawings, FIG. 1 illustrates a block diagram of an embodiment of a portion of an engine driven power generation system 8. As described in detail below, the system 8 includes an engine 10 (e.g., a reciprocating internal combustion engine) having one or more combustion chambers 12 (e.g., 1, 2, 3, 4, 5, 6, 7, 8, 10, 12, 14, 16, 18, 20, or more combustion chambers 12). Though FIG. 1 shows a combustion engine 10, it should be understood that any reciprocating device may be used. An air supply 14 is configured to provide a pressurized oxidant 16, such as air, oxygen, oxygen-enriched air, oxygen-reduced air, or any combination thereof, to each combustion chamber 12. The combustion chamber 12 is also configured to receive a fuel 18 (e.g., a liquid and/or gaseous fuel) from a fuel supply 19, and a fuel-air mixture ignites and combusts within each combustion chamber 12. The hot pressurized combustion gases cause a piston 20 adjacent to each combustion chamber 12 to move linearly within a cylinder 26 and convert pressure exerted by the gases into a rotating motion, which causes a shaft 22 to rotate. Further, the shaft 22 may be coupled to a load 24, which is powered via rotation of the shaft 22. For example, the load 24 may be any suitable device that may generate power via the rotational output of the system 10, such as an electrical generator. Additionally, although the following discussion refers to air as the oxidant 16, any suitable oxidant may be used with the disclosed embodiments. Similarly, the fuel 18 may be any suitable gaseous fuel, such as natural gas, associated petroleum gas, propane, biogas, sewage gas, landfill gas, coal mine gas, for example.

The system 8 disclosed herein may be adapted for use in stationary applications (e.g., in industrial power generating engines) or in mobile applications (e.g., in cars or aircraft). The engine 10 may be a two-stroke engine, three-stroke engine, four-stroke engine, five-stroke engine, or six-stroke engine. The engine 10 may also include any number of combustion chambers 12, pistons 20, and associated cylinders (e.g., 1-24). For example, in certain embodiments, the system 8 may include a large-scale industrial reciprocating engine having 4, 6, 8, 10, 16, 24 or more pistons 20 reciprocating in cylinders. In some such cases, the cylinders and/or the pistons 20 may have a diameter of between approximately 13.5 - 34 centimeters (cm). In some embodiments, the cylinders and/or the pistons 20 may have a diameter of between approximately 10-40 cm, 15-25 cm, or about 15 cm. The system 10 may generate power ranging from 10 kW to 10 MW. In some embodiments, the engine 10 may operate at less than approximately 1800 revolutions per minute (RPM). In some embodiments, the engine 10 may operate at less than approximately 2000 RPM, 1900 RPM, 1700 RPM, 1600 RPM, 1500 RPM, 1400 RPM, 1300 RPM, 1200 RPM, 1000 RPM, 900 RPM, or 750 RPM. In some embodiments, the engine 10 may operate between approximately 750-2000 RPM, 900-1800 RPM, or 1000-1600 RPM. In some embodiments, the engine 10 may operate at approximately 1800 RPM, 1500 RPM, 1200 RPM, 1000 RPM, or 900 RPM. Exemplary engines 10 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

The driven power generation system 8 may include one or more knock sensors 23 suitable for detecting engine "knock." The knock sensor 23 may be any sensor configured to sense vibrations caused by the engine 10, such as vibration due to detonation, pre-ignition, and or pinging. The knock sensor 23 is shown communicatively coupled to a controller, engine control unit (ECU) 25. During operations, signals from the knock sensor 23 are communicated to the ECU 25 to determine if knocking conditions (e.g., pinging) exist. The ECU 25 may then adjust certain engine 10 parameters to ameliorate or eliminate the knocking conditions. For example, the ECU 25 may adjust ignition timing and/or adjust boost pressure to eliminate the knocking. As further described herein, the knock sensor 23 may additionally derive that certain vibrations should be further analyzed and categorized to detect, for example, undesired engine conditions. The ECU 25 disposed on the engine system 8 may be communicatively coupled with one or more ECUs 25 disposed in other engine systems 8 as well as with external systems 27. The external systems 27 may include one or more cloud-based systems, workstations, mainframes, laptops, notebooks, tablets, cell phones, and the like, which may be provided as part of a remote monitoring center. For example, wired conduits such as Ethernet conduits, controller area network (CAN) bus conduits, on-board diagnostics II (OBDII) conduits, serial conduits, fiber optic conduits, and so on, may be used to couple the ECUs 25 and external systems 27. Wireless conduits for coupling the ECUs 25 and external systems 27 may include IEEE 802.11x, wireless mesh networks, Zigbee™, Bluetooth™, WiFi™, and so on.

During operations, sound fingerprints may be created and/or stored in any one or more of the ECUs 25 and/or the external systems 27. Accordingly, Fleet-based knock sensor 23 networks may be established. For example, a fleet of a particular type of the engine system 8 may be networked via the ECUs 25 and external systems 27 to share data provided via knock sensors 23. The depicted engine system 8 may sense an unknown noise via knock sensors 23 and submit either the noise fingerprint or the raw noise data to external ECUs 25 and/or external systems 27 for further analysis. Accordingly, the network (e.g., all ECUs 25 and/or external systems 27) may be used to analyze noise that was not previously seen or known by the depicted local ECU 25. Likewise, by networking several engine systems 8, a more accurate analysis of fleet noise data may be provided, and the data shared among all members of the fleet of engine systems 8. In this manner, improved noise characterization and analysis may be provided.

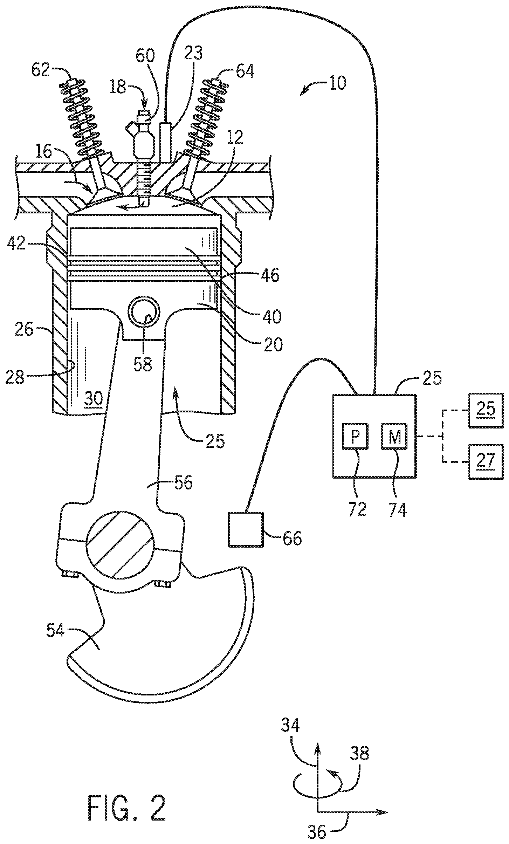

FIG. 2 is a side cross-sectional view of an embodiment of a piston assembly 25 having a piston 20 disposed within a cylinder 26 (e.g., an engine cylinder) of the reciprocating engine 10. The cylinder 26 has an inner annular wall 28 defining a cylindrical cavity 30 (e.g., bore). The piston 20 may be defined by an axial axis or direction 34, a radial axis or direction 36, and a circumferential axis or direction 38. The piston 20 includes a top portion 40 (e.g., a top land). The top portion 40 generally blocks the fuel 18 and the air 16, or a fuel-air mixture 32, from escaping from the combustion chamber 12 during reciprocating motion of the piston 20.

As shown, the piston 20 is attached to a crankshaft 54 via a connecting rod 56 and a pin 58. The crankshaft 54 translates the reciprocating linear motion of the piston 24 into a rotating motion. As the piston 20 moves, the crankshaft 54 rotates to power the load 24 (shown in FIG. 1), as discussed above. As shown, the combustion chamber 12 is positioned adjacent to the top land 40 of the piston 24. A fuel injector 60 provides the fuel 18 to the combustion chamber 12, and an intake valve 62 controls the delivery of air 16 to the combustion chamber 12. An exhaust valve 64 controls discharge of exhaust from the engine 10. However, it should be understood that any suitable elements and/or techniques for providing fuel 18 and air 16 to the combustion chamber 12 and/or for discharging exhaust may be utilized, and in some embodiments, no fuel injection is used. In operation, combustion of the fuel 18 with the air 16 in the combustion chamber 12 cause the piston 20 to move in a reciprocating manner (e.g., back and forth) in the axial direction 34 within the cavity 30 of the cylinder 26.

During operations, when the piston 20 is at the highest point in the cylinder 26 it is in a position called top dead center (TDC). When the piston 20 is at its lowest point in the cylinder 26, it is in a position called bottom dead center (BDC). As the piston 20 moves from top to bottom or from bottom to top, the crankshaft 54 rotates one half of a revolution. Each movement of the piston 20 from top to bottom or from bottom to top is called a stroke, and engine 10 embodiments may include two-stroke engines, three-stroke engines, four-stroke engines, five-stroke engine, six-stroke engines, or more.

During engine 10 operations, a sequence including an intake process, a compression process, a power process, and an exhaust process typically occurs. The intake process enables a combustible mixture, such as fuel and air, to be pulled into the cylinder 26, thus the intake valve 62 is open and the exhaust valve 64 is closed. The compression process compresses the combustible mixture into a smaller space, so both the intake valve 62 and the exhaust valve 64 are closed. The power process ignites the compressed fuel-air mixture, which may include a spark ignition through a spark plug system, and/or a compression ignition through compression heat. The resulting pressure from combustion then forces the piston 20 to BDC. The exhaust process typically returns the piston 20 to TDC while keeping the exhaust valve 64 open. The exhaust process thus expels the spent fuel-air mixture through the exhaust valve 64. It is to be noted that more than one intake valve 62 and exhaust valve 64 may be used per cylinder 26.

The depicted engine 10 also includes a crankshaft sensor 66, the knock sensor 23, and the engine control unit (ECU) 25, which includes a processor 72 and memory 74. The crankshaft sensor 66 senses the position and/or rotational speed of the crankshaft 54. Accordingly, a crank angle or crank timing information may be derived. That is, when monitoring combustion engines, timing is frequently expressed in terms of crankshaft 54 angle. For example, a full cycle of a four stroke engine 10 may be measured as a 720° cycle. The knock sensor 23 may be a Piezo-electric accelerometer, a microelectromechanical system (MEMS) sensor, a Hall effect sensor, a magnetostrictive sensor, and/or any other sensor designed to sense vibration, acceleration, sound, and/or movement. In other embodiments, sensor 23 may not be a knock sensor in the traditional sense, but any sensor that may sense vibration, pressure, acceleration, deflection, or movement.

Because of the percussive nature of the engine 10, the knock sensor 23 may be capable of detecting signatures even when mounted on the exterior of the cylinder 26. However, the knock sensor 23 may be disposed at various locations in or about the cylinder 26. Additionally, in some embodiments, a single knock sensor 23 may be shared, for example, with one or more adjacent cylinders 26. In other embodiments, each cylinder 26 may include one or more knock sensors 23. The crankshaft sensor 66 and the knock sensor 23 are shown in electronic communication with the engine control unit (ECU) 25. The ECU 25 includes a processor 72 and a memory 74. The memory 74 may store computer instructions that may be executed by the processor 72. The ECU 25 monitors and controls and operation of the engine 10, for example, by adjusting combustion timing, valve 62, 64, timing, adjusting the delivery of fuel and oxidant (e.g., air), and so on.

Advantageously, the techniques described herein may use the ECU 25 to receive data from the crankshaft sensor 66 and the knock sensor 23, and then to creates a "noise" signature by plotting the knock sensor 23 data against the crankshaft 54 position. The ECU 25 may then go through the process of analyzing the data to derive normal (e.g.., known and expected noises) and abnormal signatures (e.g., unknown or unexpected noises). The ECU 25 may then characterize the abnormal signatures, as described in more detail below. The ECU 25 may also submit data, including raw data as well as processed data (e.g., noise signatures) to other ECUs 25 and/or external systems 27. By providing for signature analysis, the techniques described herein may enable a more optimal and a more efficient operations and maintenance of the engine 10.

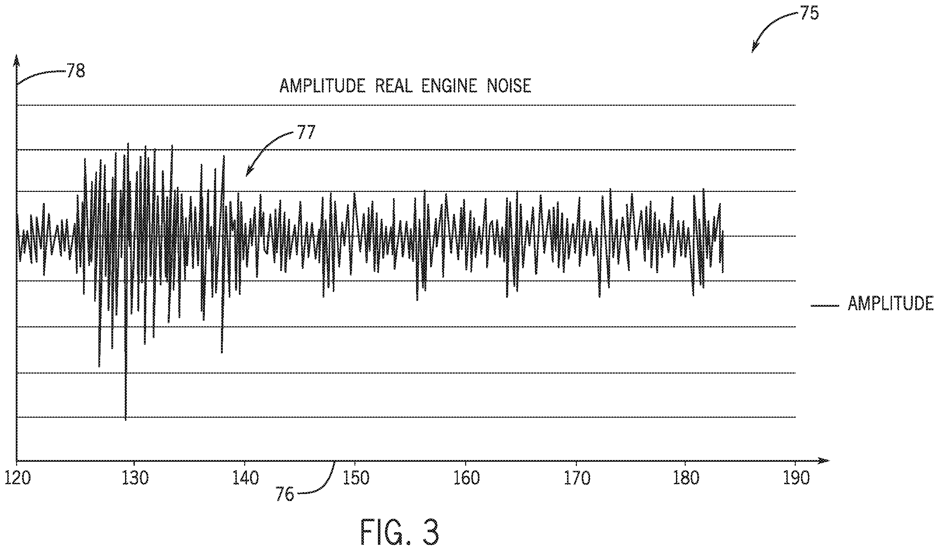

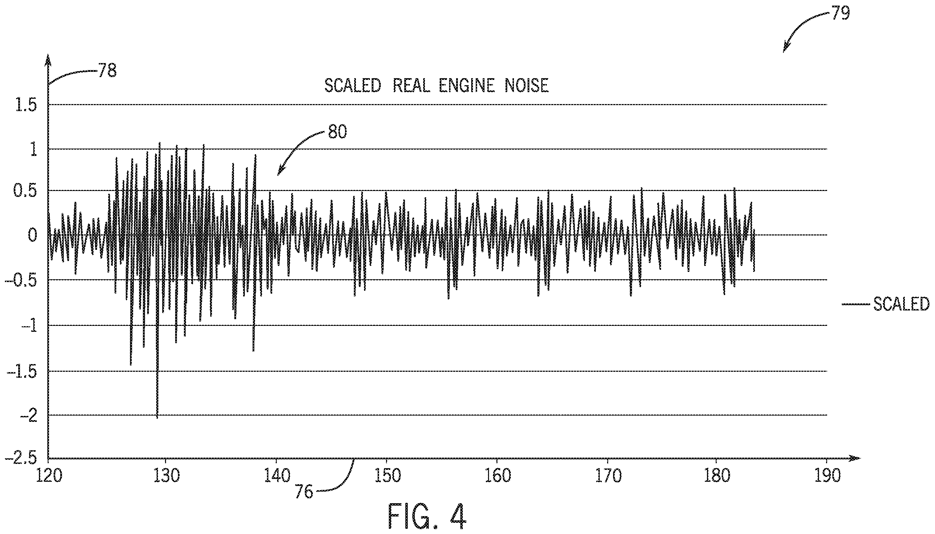

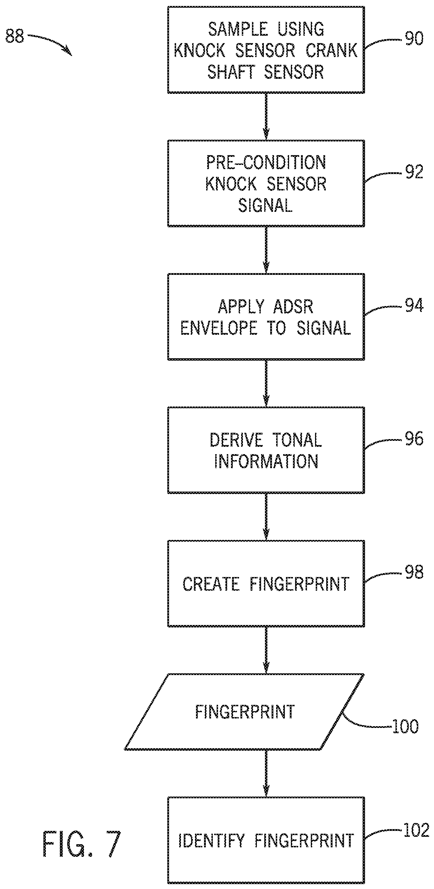

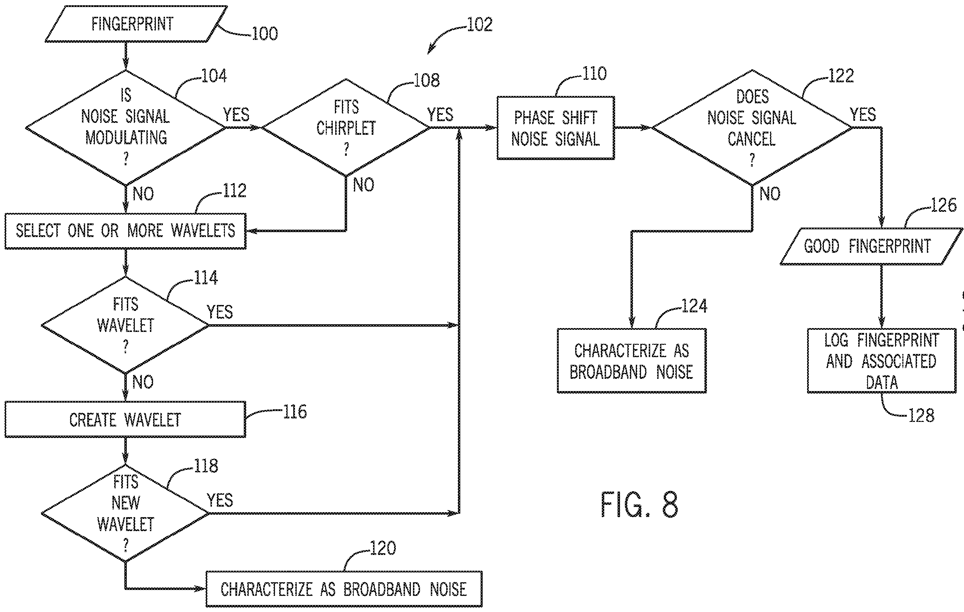

FIGS. 3-6 are illustrative of data that may be undergoing data processing, for example, via a process described in more detail with respect to FIG. 7 and 8. The data for FIGS. 3-6 may include data transmitted via the knock sensor 23 and the crank angle sensor 66. The data may additionally be processed either at the local ECU 25 and/or transmitted to other external ECUs 25 and/or the external systems 27. For example, FIG. 3 is an embodiment of a raw engine noise plot 75 derived (e.g., by the ECU(s) 25 and/or external systems 27) of noise data measured by the knock sensor 23 in which x-axis 76 is crankshaft 54 position, which is correlative of time. The plot 75 is generated when the ECU(s) 25 and/or external systems 27 combines the data received from the knock sensor 23 and the crankshaft sensor 66 during operations of the engine 10. In the depicted embodiment, an amplitude curve 77 of the knock sensor 23 signal is shown, with an amplitude axis 78. That is, the amplitude curve 77 includes amplitude measurements of vibration data (e.g., noise, sound data) sensed via the knock sensor 23 plotted against crank angle. It should be understood that this is merely a plot of a sample data set, and not intended to limit plots generated by the ECU(s) 25 and/or external systems 27. The curve 77 may then be scaled for further processing, as shown in FIG. 4.

FIG. 4 is an embodiment of a scaled engine noise plot 79, which may be derived by the ECU(s) 25 and/or external systems 27. In the scaled plot 79, the raw engine noise from amplitude plot 75 shown in FIG. 3 has been scaled to derive a scaled amplitude curve 80. In this case, a single multiplier has been applied to each data point such that the maximum positive value of the scaled amplitude curve 80 is 1. Note that the multiplier applied to each point of curve 80 in order to produce a maximum positive value of 1 may result in negative values that are less than or greater than -1. That is, the maximum negative value may be -0.5, or it may be - 1.9, as shown in scaled engine noise plot 79 shown in FIG. 4.

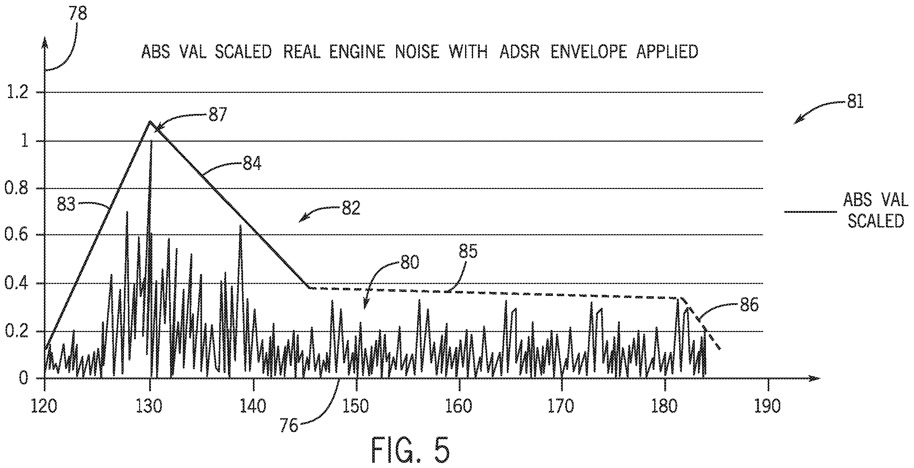

FIG. 5 is an embodiment of a scaled engine noise plot 81 with four principle parameters of an attack, decay, sustain, release (ADSR) envelope 82 laid over the top of the plot. The ADSR envelope 82 is typically used in music synthesizers in order to mimic the sound of musical instruments. Advantageously, the techniques described herein apply the ADSR envelope 82 to knock sensor 23 data to more quickly and efficiently provide for certain noise analysis, as further described below. The four principle parameters of the ADSR envelope are attack 83, decay 84, sustain 85, and release 86. The attack 80 occurs from the start of the noise to a peak amplitude 87 of the scaled curve 80. The decay 84 occurs from in the run down from the peak amplitude to a designated sustain 85 level, which may be some specified percent of the maximum amplitude. It should be understood that the order of the four parameters does not have to be attack, decay, sustain, and release. For example, for some noises, the order may be attack, sustain, decay, and release. In such cases, an ASDR, rather than ADSR, envelope would be applied. For the sake of simplicity, this will be referred to as an "ADSR envelope," but it should be understood that the term applies to a noise regardless of the order of the parameters. The sustain 85 level is the main level during the noise's duration. In some embodiments, the sustain 85 level may occur at 55% of the maximum amplitude. In other embodiments, the sustain 85 level may be 35%, 40%, 45%, 50%, 60%, or 65% of the maximum amplitude. A user, the ECU(s) 25 and/or external systems 27, may check whether the sustain level is as desired by determining whether the sustain 85 level is held for at least 15% of the duration of the signature. If the sustain 85 lasts more than 15% of the duration of the signature, the sustain 85 level is set as desired. The release 86 occurs during the run down from the sustain 85 level back to zero.

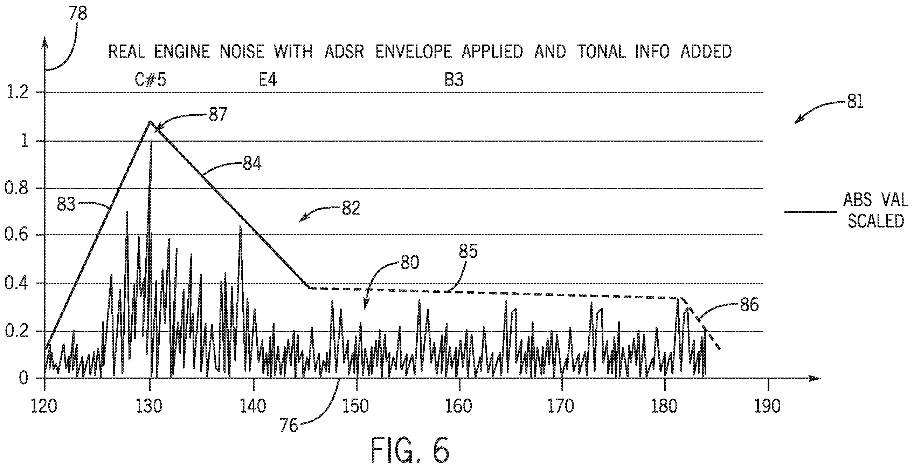

FIG. 6 shows the same scaled engine noise plot 79 shown in FIGS. 4 and 5 with certain tones overlaid. After applying the ADSR envelope 82, the ECU(s) 25 and/or external systems 27 may extract three to five of the strongest frequencies in the noise and convert them into musical tones. For example, a lookup table mapping frequency ranges to musical tones may be used. Additionally or alternatively, equations may be used based on the observation that pitch is typically perceived as the logarithm of frequency for equal temperament systems of tuning, or equations for other musical temperament systems. In other embodiments, more or less frequencies may be extracted. In the plot 81 shown in FIG. 6 the three prominent (e.g., extracted) tones are C#5, E4, and B3. It should be understood, however, and these three tones are merely examples of possible tones and not intended to limit what tones may be present in a recorded noise.

FIG. 7 is a flow chart showing an embodiment of a process 88 for characterizing a noise, such as noise sensed via the knock sensor 23. By characterizing an abnormal or unidentifiable noise, the noise can be logged and sorted for analysis, including future analysis and/or real-time analysis. The process 88 may be implemented as computer instructions or executable code stored in the memory 74 and executable by the processor 72 of the ECU(s) 25 and/or memories and processors in the external systems 27. In block 90, a sample of data is taken using the knock sensor 23 and the crankshaft sensor 66. For example, the sensors 66, 23 collect data and then transmit the data to the local ECU 25. The local ECU 25 then logs the crankshaft 54 angles at the start of data collection and at the end of data collection, as well as the time and/or crankshaft angle at the maximum (e.g., amplitude 87) and minimum amplitudes. This noise and crankshaft angle data may then be transmitted by the local ECU 25 to other ECU(s) 25 and/or external systems 27 for further processing, or the processing may be done via the local ECU 25.

In block 92, the ECU(s) 25 and/or external systems 27 pre-condition the knock sensor 23 data. This block 92 includes plotting the raw knock sensor 23 data against crankshaft 54 position. A sample raw engine noise plot was shown in FIG. 3 as the amplitude plot 75. This block 92 includes scaling the raw engine noise data. To scale the data, the ECU(s) 25 and/or external systems 27 determine a multiplier that would result in a maximum amplitude of positive 1. It should be noted that the maximum negative value has no effect on multiplier selection. The ECU(s) 25 and/or external systems 27 then multiply each data point (e.g., data point in amplitude curve 77) by the multiplier, to derive the scaled amplitude curve 80, as shown in FIG. 4. It should be understood that the scaled engine noise plot 79 in FIG. 4 showing the scaled amplitude curve 80 is merely an example and not intended to limit the scope of this disclosure to plots that look the same or similar to scaled engine noise plot 79.

In block 94, the ECU(s) 25 and/or external systems 27 apply the ASDR envelope 82 to the engine noise signal. The processing in this block was discussed in describing FIG. 5. The ASDR envelope 82 is used to divide a noise data set into four different parameters or phases (attack 83, decay 84, sustain 85, release 86). As previously discussed, it should be understood that the order of the four parameters does not have to be attack, decay, sustain, and release. For example, for some noises, the order may be attack, sustain, decay, and release. For the sake of simplicity, this will be referred to as an "ADSR envelope," but it should be understood that the term applies to a noise regardless of the order of the parameters. Traditionally, the ASDR envelope 82 is used the process of reproducing a musical sound like that of a trumpet. However, in the techniques described herein, the ASDR envelope may be used to categorize and characterize noises so they can be cataloged and sorted, either for later analysis, real-time analysis, or some other purpose. The four principle parameters of the ADSR envelope 82 are attack 83, decay 84, sustain 85, and release 86. The attack 83 occurs from the start of the noise to the peak amplitude 87. The decay 84 occurs from in the run down from the peak amplitude 87 to a designated sustain 85 level, which is some specified percent of the maximum amplitude. The sustain 85 level is the main level during the noise's duration. In some embodiments, the sustain 85 level may occur at 55% of the maximum amplitude. In other embodiments, the sustain 85 level may be 35%, 40%, 45%, 50%, 60%, or 65% of the maximum amplitude. A user, the ECU(s) 25 and/or external systems 27, may check whether the sustain level is as desired by determining whether the sustain 85 level is held for at least 15% of the duration of the signature. If the sustain 85 lasts more than 15% of the duration of the signature, the sustain 85 level is set as desired. The release 86 occurs during the run down from the sustain 85 level back to zero. In block 94 the ECU(s) 25 and/or external systems 27 measure the time from zero to maximum amplitude 87 (the maximum amplitude should have a value of 1). The ECU(s) 25 and/or external systems 27 then measure the run down time from the maximum amplitude 87 to the designated sustain level 85. The ECU(s) 25 and/or external systems 27 then measure the level and time that the noise sustains. Finally, the ECU(s) 25 and/or external systems 27 measure the time it takes for the noise to run down from the sustain level 85 to zero. The ECU(s) 25 and/or external systems 27 then log the ADSR vectors or segments defining the ADSR envelope 82.

In block 96, the ECU(s) 25 and/or external systems 27 derive tonal information (e.g., musical tones) from the data. This block was discussed in the description of FIG. 6. During this block, the ECU(s) 25 and/or external systems 27 extract tonal information from the data, identifying the three to five strongest tones in the data. FIG. 6 shows three tones derived from the signal, C#5, E4, and B3. The ECU(s) 25 and/or external systems 27 may derive five or more tones from the data. Though FIG. 6 shows tones C#5, E4, and B3, it should be understood that these tones are examples and the ECU(s) 25 and/or external systems 27 may derive any tones from the data. The ECU(s) 25 and/or external systems 27 then log the derived tonal information, which may include the frequency of the fundamental derived tones (i.e., the lowest frequency tones), the order of the fundamental derived tones, the frequency of the harmonic derived tones (i.e., tones with a frequency that is an integer multiple of the fundamental frequency), the order of the harmonic derived tones, and any other relevant tonal information.

In block 98 the ECU(s) 25 and/or external systems 27 create a fingerprint 100 based upon the ASDR envelope 82 and the tonal information derived in blocks 94 and 96. The fingerprint 100 includes a characterization of the abnormal or unidentifiable noise, breaking the noise up into its component parts (e.g., ADSR envelope 82 components 83, 84, 85, 86) and quantifying those parts so the noise can be cataloged, categorized, and sorted. At this point in the process, fingerprint 100 is based mostly upon the ADSR envelope in block 94 and the tonal information derived in block 96.

In block 102, the fingerprint 100 is identified and checked. Using a number of techniques, which will be described later, the fingerprint 100 may be modified or added to and then checked again.

FIG. 8 is a flow chart showing further details of an embodiment of process 102, which identifies the fingerprint 100 depicted in FIG. 7. The process 102 may the implemented as computer instructions or executable code stored in the memory 74 and executable by the processor 72 of the ECU(s) 25 and/or processors and memories of the external systems 27. In decision 104, the ECU(s) 25 and/or external systems 27 determines whether or not the noise signal is modulating (i.e., changing from one tone to another). If the signal is not modulating (decision 104), then the ECU(s) 25 and/or external systems 27 moves on to block 112 and attempts to find a matching wavelet. A wavelet, effectively a piece or component of a wave, is a wave-like oscillation with an amplitude that begins at zero, increases, decreases, or both, and then returns to zero. Wavelets can be modified by adjusting the frequency, amplitude, and duration, which makes them very useful in signal processing. For example, in continuous wavelet transforms a given signal may be reconstructed by integrating over the various modified frequency components. Commonly used "mother" wavelets include Meyer, Morlet, and Mexican hat wavelets. However, new wavelets may also be created if the mother wavelets do not fit.

If the sound is modulating (decision 104), the ECU(s) 25 and/or external systems 27 move on to decision 108 and determines whether or not the noise signal fits a chirplet. A chirp is a signal in which the frequency increases or decreases with time. Just as a wavelet is a piece of a wave, a chirplet is a piece of a chirp. Much like wavelets, the characteristics of a chirplet can be modified, and then multiple chirplets combined (i.e., a chirplet transform), in order to approximate a signal. A chirplet may modulate (i.e., change frequency) upward or downward. In decision 108, the ECU(s) 25 and/or external systems 27 may adjust the modulation of chirplets in order to fit the chirplets to the noise signal. If the ECU(s) 25 and/or external systems 27, after adjusting the modulation of chirplets, can adjust chriplets to fit the noise signal, then the ECU(s) 25 and/or external systems 27 log whether there was a chirplet that fit the signal, and if so, the first frequency of the chirplet, the second frequency of the chirplet, and the rate of chirplet modulation in frequency/(crank angle) or frequency per second. The ECU(s) 25 and/or external systems 27 then move to block 110, in which the ECU(s) 25 and/or external systems 27 phase shifts the noise signal in order to check the fingerprint 100. In block 110, the ECU(s) 25 and/or external systems 27 create a generated noise signal based upon the ASDR envelope 82 vectors or other components, extracted tonal information, and chirplet or wavelet fits. The ECU(s) 25 and/or external systems 27 then shift (block 110) the generated signal 180 degrees out of phase. If the characterization of the noise signal is correct, the phase-shifted generated noise signal should cancel out the noise signal.

If the noise signal does not fit a chirplet (decision 108), the ECU(s) 25 and/or external systems 27 move on to block 112 and attempts to fit a wavelet to the noise signal. In block 112, the ECU(s) 25 and/or external systems 27 select one or more wavelets that may fit the noise signal. The selected wavelet or wavelets may be a Meyer wavelet, a Morlet wavelet, a Mexican hat wavelet, or some other known wavelet. In decision 114, the ECU(s) 25 and/or external systems 27 determine whether or not the selected wavelet or wavelets fits the noise signal. If the selected wavelet fits (decision 114), the ECU(s) 25 and/or external systems 27 log that there was a wavelet fit, the mother wavelet type, the first scale range of the wavelet, and the second scale range of the wavelet. If the wavelet fits (decision 114), the ECU(s) 25 and/or external systems 27 move on to block 110, in which the ECU(s) 25 and/or external systems 27 phase shift the noise signal in order to check the fingerprint 100. If one of the selected wavelets does not fit the noise signal (decision 114), the ECU(s) 25 and/or external systems 27 may move on to block 116 and create a wavelet. In decision 118, the ECU(s) 25 and/or external systems 27 determine if the newly created wavelet fits the noise signal. If the created wavelet fits (decision 118), the ECU(s) 25 and/or external systems 27 log that there was a wavelet fit, the first scale range of the wavelet, and the second scale range of the wavelet. If the created wavelet fits the noise signal (decision 118), the ECU(s) 25 and/or external systems 27 move on to block 110, in which the ECU(s) 25 and/or external systems 27 phase shift the noise signal in order to check the fingerprint 100. If the new wavelet does not fit (decision 118), the ECU(s) 25 and/or external systems 27 move on to block 120 in which it characterizes the noise signal as broadband noise.

Returning now to block 110, if the ECU(s) 25 and/or external systems 27 find a chirplet or wavelet that fits the noise signal, the ECU(s) 25 and/or external systems 27 will check the fit by attempting noise cancellation. Accordingly, in block 110, the ECU(s) 25 and/or external systems 27 create a generated noise signal based upon the ASDR envelope 82 vectors or other components, extracted tonal information, and chirplet or wavelet fits. The ECU(s) 25 and/or external systems 27 then shift (block 110) the generated signal by 180 degrees. The ECU(s) 25 and/or external systems 27 then determine (decision 122) whether the shifted signal cancels out the original noise signal within a desired residual tolerance. If the shifted signal cancels out (decision 122) the original noise signal within a desired residual tolerance, the ECU(s) 25 and/or external systems 27 determine that the fingerprint 100 is a "good" fingerprint 126 and moves on to block 128, in which the ECU(s) 25 and/or external systems 27 log the coefficients and associated data, which may include the root mean squared (RMS) value of the signal, or the RMS error. The ECU(s) 25 and/or external systems 27 may log other data as well, including, but not limited to crankshaft angles at the beginning or end of the signal, ASDR envelope 82 vectors or other ADSR components, fundamental spectral tones, harmonic spectral tones, order of spectral tones, order of harmonic tones, whether a chirplet fit, the first chirplet frequency, the second chirplet frequency, the rate of chirplet modulation, whether a wavelet fit, the mother wavelet type, the first scale range of the wavelet, the second scale range of the wavelet, the maximum amplitude value and time, the minimum amplitude value and time, the RMS value of the signal, the RMS error of the signal against the generated signal, and whether or not the noise is classified as broadband noise. This logged data, and other data logged allows the ECU(s) 25 and/or external systems 27 to characterize and categorize most unknown noises so these noises can be stored on the memory component 74 of the ECU(s) 25 and/or external systems 27, perhaps transferred to some other memory device, and then logged and sorted in a database for future analysis. If, on the other hand, the ECU(s) 25 and/or external systems 27 determine (decision 122) that the shifted signal did not cancel out the original noise signal within a residual tolerance, the ECU(s) 25 and/or external systems 27 move on to block 124 in which the noise signal is characterized as broadband noise. It is to be understood that the process 88 and the process 102 shown above may be executed by the local ECU 25, by one or more external ECUs 25, and by the external systems 27, or by a combination thereof. Accordingly, the techniques described herein may provide for networks of ECUs 25 that may all process noise data to derive the fingerprint 100, and the fingerprint 100 may then be identified (e.g., block 102 of process 88) by any one or more of the ECUs 25, the external systems 27, or any combination thereof.

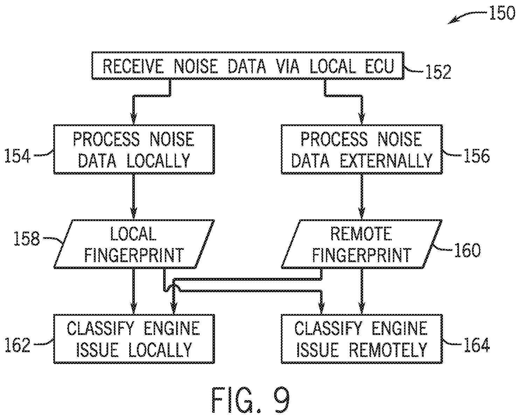

Turning now to FIG. 9, the figure is a flow chart of a process 150 suitable for creating and identifying fingerprints in networks that included several engine systems 8. The process 150 may be may the implemented as computer instructions or executable code stored in the memory 74 and executable by the processor 72 of the ECU(s) 25 and/or processors and memories of the external systems 27. In the depicted embodiment, the noise data or signals from knock sensors 23 may be received (block 152) by the local ECU 25. The local ECU 25 may then process the noise data (block 154). Additionally or alternatively, the local ECU 25 may communicate the noise data to external ECU(s) 25 and/or the external systems 27, for external processing (block 156). Accordingly, a local fingerprint 158, a remote fingerprint 160, or both, may be derived. To derive the fingerprints 158, 160, the process 88 and/or 102 may be executed. Accordingly, each of the fingerprints 158, 160 may correspond to fingerprint 100, to the fingerprint 126, or to both.

Accordingly, the local ECU 25 may classify engine 8 issues locally (block 162) by using either the local fingerprint 158, the remote fingerprint 160, or both. Indeed, the local ECU 25 may be communicatively coupled to remote ECU(s) 25 and/or the external systems 27 and receive remote fingerprints 160 for use in classifying engine 8 issues. Additionally or alternatively, engine 8 issues may be classified remotely (block 164). For example, the local fingerprint 158, the remote fingerprint 160, or both, may be processed by the remote ECU(s) 25 and/or external systems 27 to classify (block 164) engine issues remotely. Classification of engine issues (block 162 and/or block 164) may involve comparing the signatures 158 and/or 160 among known signatures. The known signatures may be representative of certain issues, such as valve 62, 64 train issues, cylinder 26 issues, piston 20 issues, camshaft 54 issues, and so on. By comparing the fingerprints 158 and/or 160 to known fingerprint signatures, the process 150 may detect a variety of engine 8 conditions.

Technical effects of the invention include characterizing a noise signal and deriving a signature from the noise signal, which may additionally include preconditioning the noise signal, applying an ASDR envelope to the noise signal, extracting tonal information (e.g., musical tones) from the noise signal and fitting the noise signal to a chirplet and/or a wavelet. The processing of noise signals may be done via a local ECU, a remote ECU, an external system (e.g., cloud-based systems, workstations, mainframes, laptops, notebooks, tablets, cell phones, and the like), which may be provided as part of a remote monitoring center. The signature may be compared to known signatures to derive a variety of engine conditions.

## Claims

1. A method of analyzing a noise signal, comprising:
receiving, via a local engine control unit (ECU), a noise signal sensed by a knock sensor disposed in a reciprocating device;
processing the noise signal via at least one of the local ECU, a remote ECU, or an external system, wherein the processing comprises:
preconditioning the noise signal to derive a preconditioned noise signal;
applying an ADSR envelope (82) to the preconditioned noise signal;
extracting tonal information from the preconditioned noise signal; and
creating a fingerprint of the noise signal based on the ADSR envelope, the tonal information, or a combination thereof,
wherein applying an attack, sustain, decay and release (ADSR) envelope comprises:
measuring a first period of time between a start of the preconditioned noise signal and a time at which the preconditioned noise signal reaches a maximum amplitude;
measuring a second period of time between the time at which the preconditioned noise signal reaches the maximum amplitude and a second time at which the noise signal runs down to a sustain level;
measuring a third period of time during which the preconditioned noise signal sustains; and
measuring a fourth period of time during which the preconditioned noise signal runs down from the sustain level to zero,
wherein the creating the fingerprint comprises creating the fingerprint via the local ECU and transmitting the fingerprint to the remote ECU, the external system, or a combination thereof.

2. The method of claim 1, comprising analyzing, via the remote ECU, the external system, or the combination thereof, the fingerprint to derive an engine issue, and communication the engine issue to the local ECU.

3. The method of claim 1, comprising creating a second fingerprint via the remote ECU, the external system, or a combination thereof, wherein creating the fingerprint comprises creating the fingerprint via the local ECU; and using the fingerprint and the second fingerprint to classify an engine issue.

4. The method of claim 1, comprising fitting the preconditioned noise signal to a chirplet by:
determining whether the preconditioned noise signal modulates upward or downward; and
adjusting a modulation rate of the chirplet until the chirplet fits the noise signal.

5. A system, comprising:
an engine controller configured to control a reciprocating device, wherein the engine controller comprises a processor configured to:
receive a noise signal sensed by a knock sensor configured to be disposed in the reciprocating device;
create a local fingerprint based on the noise signal, transmit the noise signal to a second engine controller to receive a remote fingerprint from the external engine controller, or a combination thereof; and
classify an engine issue by applying the local fingerprint, the remote fingerprint, or the combination thereof,
wherein the engine controller is configured to:
precondition the noise signal to derive a preconditioned noise signal;
apply an ADSR envelope to the preconditioned noise signal;
extract tonal information from the preconditioned noise signal; and
create the local fingerprint of the noise signal based on the ADSR envelope, the tonal information, or a combination thereof,
wherein the controller is further configured to:
measure a first period of time between a start of the reciprocating device noise signal and a time at which the reciprocating device noise signal reaches a maximum amplitude;
measure a second period of time between the time at which the reciprocating device noise signal reaches a maximum amplitude and a time at which the reciprocating device noise signal runs down to a designated sustain level;
measure the designated sustain level;
measure a third period of time during which the reciprocating device noise sustains; and
measure a fourth period of time during which the reciprocating device noise signal runs down from the sustain level to zero to apply the ADSR envelope,
wherein the creating the fingerprint comprises creating the fingerprint via the local ECU and transmitting the fingerprint to the remote ECU, the external system, or a combination thereof.

6. The system of claim 5, wherein the engine controller is configured to classify the engine issue bv communicating the local fingerprint to the remote ECU, and to receive the engine issue from the remote ECU.

7. The system of claim 5, wherein the engine controller is configured to transmit the noise signal to an external system and to receive a second remote fingerprint from the external system based on the noise signal, and wherein the engine controller is configured to classify the engine issue by applying the local fingerprint, the remote fingerprint, the second remote fingerprint, or a combination thereof.

8. The system of claim 5, wherein the engine controller is configured to: fit the preconditioned noise signal to a chirplet by:
determine whether the preconditioned noise signal modulates upward or downward; and
adjust a modulation rate of the chirplet until the chirplet fits the noise signal.

9. A non-transitory computer readable medium comprising executable instructions that when executed cause a processor to:
receive a noise signal sensed by a knock sensor configured to be disposed in the reciprocating device;
create a local fingerprint based on the noise signal, transmit the noise signal to a second engine controller to receive a remote fingerprint from the external engine controller, or a combination thereof; and
classify an engine issue by applying the local fingerprint, the remote fingerprint, or the combination thereof,
precondition the noise signal to derive a preconditioned noise signal;
apply an ADSR envelope (82) to the preconditioned noise signal;
extract tonal information from the preconditioned noise signal; and
create the local fingerprint of the noise signal based on the ADSR envelope, the tonal information, or a combination thereof, and
measure a first period of time between a start of the reciprocating device noise signal and a time at which the reciprocating device noise signal reaches a maximum amplitude;
measure a second period of time between the time at which the reciprocating device noise signal reaches a maximum amplitude and a time at which the reciprocating device noise signal runs down to a designated sustain level;
measure the designated sustain level;
measure a third period of time during which the reciprocating device noise sustains; and
measure a fourth period of time during which the reciprocating device noise signal runs down from the sustain level to zero to apply the ADSR envelope,
wherein the creating the fingerprint comprises creating the fingerprint via the local ECU and transmitting the fingerprint to the remote ECU, the external system, or a combination thereof.

10. The non-transitory computer readable medium comprising executable instructions of claim 9, that when executed cause the processor to classify the engine issue by communicating the local fingerprint to the remote ECU, and to receive the engine issue from the remote ECU.

11. The non-transitory computer readable medium comprising executable instructions of claim 9, that when executed cause the processor to: transmit the noise signal to an external system and to receive a second remote fingerprint from the external system based on the noise signal, and to classify the engine issue by applying the local fingerprint, the remote fingerprint, the second remote fingerprint, or a combination thereof.

## Patentansprüche

1. Verfahren zum Analysieren eines Rauschsignals, umfassend:
Empfangen eines Rauschsignals über eine lokale Motorsteuereinheit (Engine Control Unit, ECU), das durch einen in einer Hubkolbenvorrichtung angeordneten Klopfsensor detektiert wird;
Verarbeiten des Rauschsignals über wenigstens eine lokale ECU, eine räumlich abgesetzten ECU, oder ein externes Systems,
wobei das Verarbeiten Folgendes umfasst:
Vorkonditionieren des Rauschsignals, um ein vorkonditioniertes Rauschsignal zu erhalten;
Anwenden einer ADSR-Hüllkurve (82) für das vorkonditionierte Rauschsignal;
Extrahieren von Toninformationen aus dem vorkonditionierten Rauschsignal; und
Erzeugen eines Fingerabdrucks für das Rauschsignal auf Basis der ADSR-Hüllkurve, der Toninformationen, oder einer Kombination davon,
wobei das Anwenden einer Attack, Sustain, Decay and Release (ADSR)-Hüllkurve Folgendes umfasst:
Messen eines ersten Zeitraums zwischen einem Beginn des vorkonditionierten Rauschsignals und einem Zeitpunkt, an dem das vorkonditionierte Rauschsignal eine maximale Amplitude erreicht;
Messen eines zweiten Zeitraums zwischen dem Zeitpunkt, an dem das vorkonditionierte Rauschsignal die maximale Amplitude erreicht, und einem zweiten Zeitpunkt, an dem das Rauschsignal auf einen Halte-Pegel (Sustain) sinkt;
Messen eines dritten Zeitraums, während dem das vorkonditionierte Rauschsignal gleich bleibt (sustains); und
Messen eines vierten Zeitraums, während dem das vorkonditionierte Rauschsignal von dem Halte-Pegel auf null sinkt,
wobei das Erzeugen des Fingerabdrucks Folgendes umfasst: Erzeugen des Fingerabdrucks über die lokale ECU, und Senden des Fingerabdrucks zu der räumlich abgesetzten ECU, dem externen System, oder einer Kombination davon.

2. Verfahren nach Anspruch 1, umfassend:
Analysieren des Fingerabdrucks, um ein Motorproblem abzuleiten über die räumlich abgesetzte ECU, das externe System, oder die Kombination davon -, und Übermitteln des Motorproblems an die lokale ECU.

3. Verfahren nach Anspruch 1, umfassend:
Erzeugen eines zweiten Fingerabdrucks über die räumlich abgesetzte ECU, das externe System, oder eine Kombination davon,
wobei das Erzeugen des Fingerabdrucks Folgendes umfasst: Erzeugen des Fingerabdrucks über die lokale ECU; und
Verwenden des Fingerabdrucks und des zweiten Fingerabdrucks zum Klassifizieren eines Motorproblems.

4. Verfahren nach Anspruch 1, umfassend:
Einpassen des vorkonditionierten Rauschsignals in ein Chirplet durch:
Bestimmen, ob das vorkonditionierte Rauschsignal aufwärts oder abwärts moduliert; und
Justieren einer Modulationsrate des Chirplets, bis das Chirplet zu dem Rauschsignal passt.

5. System, das Folgendes umfasst:
eine Motorsteuereinheit, die dafür konfiguriert ist, eine Hubkolbenvorrichtung zu steuern,
wobei die Motorsteuereinheit einen Prozessor umfasst, der konfiguriert ist zum:
Empfangen eines Rauschsignals über eine lokale Motorsteuereinheit (Engine Control Unit, ECU), das durch einen in einer Hubkolbenvorrichtung angeordneten Klopfsensor detektiert wird;
Erzeugen eines lokalen Fingerabdrucks auf der Basis des Rauschsignals, Senden des Rauschsignals zu einer zweiten Motorsteuereinheit, um einen räumlich abgesetzten Fingerabdruck von der externen Motorsteuereinheit zu empfangen, oder eine Kombination davon; und
Klassifizieren eines Motorproblems durch Anwenden des lokalen Fingerabdrucks, des räumlich abgesetzten Fingerabdrucks, oder der Kombination davon,
wobei die Motorsteuereinheit für Folgendes konfiguriert ist:
Vorkonditionieren des Rauschsignals, um ein vorkonditioniertes Rauschsignal zu erhalten;
Anwenden einer ADSR-Hüllkurve auf das vorkonditionierte Rauschsignal;
Extrahieren von Toninformationen aus dem vorkonditionierten Rauschsignal; und
Erzeugen des lokalen Fingerabdrucks des Rauschsignals auf der Basis der ADSR-Hüllkurve, der Toninformationen, oder einer Kombination davon,
wobei die Steuereinheit des Weiteren für Folgendes konfiguriert ist:
Messen eines ersten Zeitraums zwischen einem Beginn des Rauschsignals der Hubkolbenvorrichtung und einem Zeitpunkt, an dem das Rauschsignal der Hubkolbenvorrichtung eine maximale Amplitude erreicht;
Messen eines zweiten Zeitraums zwischen dem Zeitpunkt, an dem das Rauschsignal der Hubkolbenvorrichtung eine maximale Amplitude erreicht, und einem Zeitpunkt, an dem das Rauschsignal der Hubkolbenvorrichtung auf einen angegebenen Halte-Pegel (Sustain) sinkt;
Messen des angegebenen Halte-Pegels;
Messen eines dritten Zeitraums, während dem das Rauschen der Hubkolbenvorrichtung gleich bleibt (sustains); und
Messen eines vierten Zeitraums, während dem das Rauschsignal der Hubkolbenvorrichtung von dem Halte-Pegel auf null sinkt, um die ADSR-Enveloppe anzuwenden,
wobei das Erzeugen des Fingerabdrucks Folgendes umfasst: Erzeugen des Fingerabdrucks über die lokale ECU, und Senden des Fingerabdrucks zu der räumlich abgesetzten ECU, dem externen System, oder einer Kombination davon.

6. System nach Anspruch 5,
wobei die Motorsteuereinheit konfiguriert ist zum: Klassifizieren des Motorproblems durch Übermitteln des lokalen Fingerabdrucks zu der räumlich abgesetzten ECU, und Empfangen des Motorproblems von der räumlich abgesetzten ECU.

7. System nach Anspruch 5,
wobei die Motorsteuereinheit konfiguriert ist zum: Senden des Rauschsignals zu einem externen System, und Empfangen eines zweiten räumlich abgesetzten Fingerabdrucks von dem externen System auf der Basis des Rauschsignals, und
wobei die Motorsteuereinheit dafür konfiguriert ist, das Motorproblem durch Anwenden des lokalen Fingerabdrucks, des räumlich abgesetzten Fingerabdrucks, des zweiten räumlich abgesetzten Fingerabdrucks, oder einer Kombination davon zu klassifizieren.

8. System nach Anspruch 5,
wobei die Motorsteuereinheit für Folgendes konfiguriert ist:
Einpassen des vorkonditionierten Rauschsignals in ein Chirplet durch:
Bestimmen, ob das vorkonditionierte Rauschsignal aufwärts oder abwärts moduliert; und
Justieren einer Modulationsrate des Chirplets, bis das Chirplet zu dem Rauschsignal passt.

9. Nicht-flüchtiges computerlesbares Speichermedium, das ausführbare Instruktionen umfasst, die, wenn sie ausgeführt werden, einen Prozessor zu Folgendem veranlassen:
Empfangen eines Rauschsignals über eine lokale Motorsteuereinheit (Engine Control Unit, ECU), das durch einen in einer Hubkolbenvorrichtung angeordneten Klopfsensor detektiert wird;
Erzeugen eines lokalen Fingerabdrucks auf der Basis des Rauschsignals, Senden des Rauschsignals zu einer zweiten Motorsteuereinheit, um einen räumlich abgesetzten Fingerabdruck von der externen Motorsteuereinheit zu empfangen, oder eine Kombination davon; und
Klassifizieren eines Motorproblems durch Anwenden des lokalen Fingerabdrucks, des räumlich abgesetzten Fingerabdrucks, oder der Kombination davon, Vorkonditionieren des Rauschsignals, um ein vorkonditioniertes Rauschsignal zu erhalten;
Anwenden einer ADSR-Hüllkurve (82) auf das vorkonditionierte Rauschsignal;
Extrahieren von Toninformationen aus dem vorkonditionierten Rauschsignal; und
Erzeugen des lokalen Fingerabdrucks des Rauschsignals auf der Basis der ADSR-Hüllkurve, der Toninformationen, oder einer Kombination davon, und Messen eines ersten Zeitraums zwischen einem Beginn des Rauschsignals der Hubkolbenvorrichtung und einem Zeitpunkt, an dem das Rauschsignal der Hubkolbenvorrichtung eine maximale Amplitude erreicht;
Messen eines zweiten Zeitraums zwischen dem Zeitpunkt, an dem das Rauschsignal der Hubkolbenvorrichtung eine maximale Amplitude erreicht, und einem Zeitpunkt, an dem das Rauschsignal der Hubkolbenvorrichtung auf einen angegebenen Halte-Pegel (Sustain) sinkt;
Messen des angegebenen Halte-Pegels;
Messen eines dritten Zeitraums, während dem das Rauschen der Hubkolbenvorrichtung gleich bleibt (sustains); und
Messen eines vierten Zeitraums, während dem das Rauschsignal der Hubkolbenvorrichtung von dem Halte-Pegel auf null sinkt, um die ADSR-Hüllkurve anzuwenden,
wobei das Erzeugen des Fingerabdrucks umfasst: Erzeugen des Fingerabdrucks über die lokale ECU, und Senden des Fingerabdrucks zu der räumlich abgesetzten ECU, dem externen System, oder einer Kombination davon.

10. Nicht-flüchtiges computerlesbares Speichermedium, das ausführbare Instruktionen umfasst, nach Anspruch 9, die, wenn sie ausgeführt werden, den Prozessor zu Folgendem veranlassen:
Klassifizieren des Motorproblems durch Übermitteln des lokalen Fingerabdrucks zu der räumlich abgesetzten ECU, und
Empfangen des Motorproblems von der räumlich abgesetzten ECU.

11. Nicht-flüchtiges computerlesbares Speichermedium, das ausführbare Instruktionen umfasst, nach Anspruch 9, die, wenn sie ausgeführt werden, den Prozessor zu Folgendem veranlassen:
Senden des Rauschsignals zu einem externen System, und Empfangen eines zweiten räumlich abgesetzten Fingerabdrucks von dem externen System auf der Basis des Rauschsignals, und
Klassifizieren des Motorproblems durch Anwenden des lokalen Fingerabdrucks, des räumlich abgesetzten Fingerabdrucks, des zweiten räumlich abgesetzten Fingerabdrucks, oder einer Kombination davon.

## Revendications

1. Procédé d'analyse d'un signal de bruit, comprenant:
recevoir, par l'intermédiaire d'une unité de commande de moteur (ECU) locale, un signal de bruit détecté par un capteur de détonation disposé dans un dispositif à mouvement alternatif ;
traiter le signal de bruit par l'intermédiaire d'au moins l'un des éléments parmi l'unité de commande ECU locale, une unité de commande ECU distante ou un système externe, dans lequel l'étape de traitement comprend :
préconditionner le signal de bruit en vue de dériver un signal de bruit préconditionné ; appliquer une enveloppe ADSR (82) au signal de bruit préconditionné ;
extraire des informations tonales du signal de bruit préconditionné ; et
créer une empreinte numérique du signal de bruit sur la base de l'enveloppe ADSR, des informations tonales, ou d'une combinaison de celles-ci ;
dans lequel l'application d'une enveloppe d'attaque, chute, entretien, et extinction (ADSR) comprend :
mesurer une première période de temps entre un début du signal de bruit préconditionné et un instant auquel le signal de bruit préconditionné atteint une amplitude maximale ;
mesurer une deuxième période de temps entre l'instant auquel le signal de bruit préconditionné atteint l'amplitude maximale et un second instant auquel le signal de bruit descend jusqu'à un niveau d'entretien ;
mesurer une troisième période de temps au cours de laquelle le signal de bruit préconditionné est entretenu ; et
mesurer une quatrième période de temps au cours de laquelle le signal de bruit préconditionné est ramené du niveau d'entretien à une valeur nulle ;
dans lequel la création de l'empreinte numérique comprend la création de l'empreinte numérique par l'intermédiaire de l'unité de commande ECU locale, et la transmission de l'empreinte numérique à l'unité de commande ECU distante, au système externe, ou à une combinaison de ceux-ci.

2. Procédé selon la revendication 1, comprenant analyser, par l'intermédiaire de l'unité de commande ECU distante, du système externe, ou de leur combinaison, l'empreinte numérique, en vue de dériver un problème moteur, et à communiquer le problème moteur à l'unité de commande ECU locale.

3. Procédé selon la revendication 1, comprenant créer une seconde empreinte numérique par l'intermédiaire de l'unité de commande ECU distante, le système externe ou une combinaison de ceux-ci, dans lequel la création de l'empreinte numérique comprend la création de l'empreinte numérique par l'intermédiaire de l'unité de commande ECU locale ; et l'utilisation de l'empreinte numérique et la seconde empreinte numérique en vue de classer un problème moteur.

4. Procédé selon la revendication 1, comprenant adapter le signal de bruit préconditionné à une compression d'impulsions de courte durée, en :
déterminant si le signal de bruit préconditionné module vers le haut ou vers le bas ; et
ajustant un taux de modulation de la compression d'impulsions de courte durée jusqu'à ce que la compression d'impulsions de courte durée s'adapte au signal de bruit.

5. Système, comprenant :
un contrôleur de moteur configuré de manière à commander un dispositif à mouvement alternatif, dans lequel le contrôleur de moteur comprend un processeur configuré de manière à :
recevoir un signal de bruit détecté par un capteur de détonation configuré de manière à être disposé dans le dispositif à mouvement alternatif ;
créer une empreinte numérique locale sur la base du signal de bruit, transmettre le signal de bruit à un second contrôleur de moteur en vue de recevoir une empreinte numérique distante en provenance du contrôleur de moteur externe, ou une combinaison de celles-ci ; et
classer un problème moteur en appliquant l'empreinte numérique locale, l'empreinte numérique distante ou leur combinaison ;
dans lequel le contrôleur de moteur est configuré de manière à :
préconditionner le signal de bruit en vue de dériver un signal de bruit préconditionné ; appliquer une enveloppe ADSR au signal de bruit préconditionné ;
extraire des informations tonales du signal de bruit préconditionné ; et
créer l'empreinte numérique locale du signal de bruit sur la base de l'enveloppe ADSR, des informations tonales ou de leur combinaison ;
dans lequel le contrôleur est en outre configuré de manière à :
mesurer une première période de temps entre le début du signal de bruit de dispositif à mouvement alternatif et un instant auquel le signal de bruit de dispositif à mouvement alternatif atteint une amplitude maximale ;
mesurer une deuxième période de temps entre l'instant auquel le signal de bruit de dispositif à mouvement alternatif atteint une amplitude maximale et un instant auquel le signal de bruit de dispositif à mouvement alternatif descend jusqu'à un niveau d'entretien désigné ;
mesurer le niveau d'entretien désigné ;
mesurer une troisième période de temps au cours de laquelle le signal de bruit de dispositif à mouvement alternatif est entretenu ; et
mesurer une quatrième période de temps au cours de laquelle le signal de bruit de dispositif à mouvement alternatif est ramené du niveau d'entretien à une valeur nulle, en vue d'appliquer l'enveloppe ADSR ;
dans lequel la création de l'empreinte numérique comprend la création de l'empreinte numérique par l'intermédiaire de l'unité de commande ECU locale, et la transmission de l'empreinte numérique à l'unité de commande ECU distante, au système externe, ou à une combinaison de ceux-ci.

6. Système selon la revendication 5, dans lequel le contrôleur de moteur est configuré de manière à classer le problème moteur en communiquant l'empreinte numérique locale à l'unité de commande ECU distante, et à recevoir le problème moteur en provenance de l'unité de commande ECU distante.

7. Système selon la revendication 5, dans lequel le contrôleur de moteur est configuré de manière à transmettre le signal de bruit à un système externe, et à recevoir une seconde empreinte numérique distante, en provenance du système externe, sur la base du signal de bruit, et dans lequel le contrôleur de moteur est configuré de manière à classer le problème moteur en appliquant l'empreinte numérique locale, l'empreinte numérique distante, la seconde empreinte numérique distante ou une combinaison de celles-ci.

8. Système selon la revendication 5, dans lequel le contrôleur de moteur est configuré de manière à :
adapter le signal de bruit préconditionné à une compression d'impulsions de courte durée en mettant :
déterminant si le signal de bruit préconditionné module vers le haut ou vers le bas ; et
ajustant un taux de modulation de la compression d'impulsions de courte durée jusqu'à ce que la compression d'impulsions de courte durée s'adapte au signal de bruit.

9. Support non transitoire lisible par ordinateur, comprenant des instructions exécutables qui, lorsqu'elles sont exécutées, amènent un processeur à :
recevoir un signal de bruit détecté par un capteur de détonation configuré de manière à être disposé dans le dispositif à mouvement alternatif ;
créer une empreinte numérique locale sur la base du signal de bruit, transmettre le signal de bruit à un second contrôleur de moteur en vue de recevoir une empreinte numérique distante en provenance du contrôleur de moteur externe, ou une combinaison de celles-ci ; et
classer un problème moteur en appliquant l'empreinte numérique locale, l'empreinte numérique distante ou leur combinaison ;
préconditionner le signal de bruit en vue de dériver un signal de bruit préconditionné ;
appliquer une enveloppe ADSR (82) au signal de bruit préconditionné ;
extraire des informations tonales du signal de bruit préconditionné ; et
créer l'empreinte numérique locale du signal de bruit sur la base de l'enveloppe ADSR, des informations tonales ou d'une combinaison de celles-ci, et
mesurer une première période de temps entre un début du signal de bruit de dispositif à mouvement alternatif et un instant auquel le signal de bruit de dispositif à mouvement alternatif atteint une amplitude maximale ;
mesurer une deuxième période de temps entre l'instant auquel le signal de bruit de dispositif à mouvement alternatif atteint une amplitude maximale et un instant auquel le signal de bruit de dispositif à mouvement alternatif descend jusqu'à un niveau d'entretien désigné ;
mesurer le niveau d'entretien désigné ;
mesurer une troisième période de temps au cours de laquelle le signal de bruit de dispositif à mouvement alternatif est entretenu ; et
mesurer une quatrième période de temps au cours de laquelle le signal de bruit de dispositif à mouvement alternatif est ramené du niveau d'entretien à une valeur nulle, en vue d'appliquer l'enveloppe ADSR ;
dans lequel la création de l'empreinte numérique comprend la création de l'empreinte numérique par l'intermédiaire de l'unité de commande ECU locale, et la transmission de l'empreinte numérique à l'unité de commande ECU distante, au système externe, ou à une combinaison de ceux-ci.

10. Support non transitoire lisible par ordinateur comprenant des instructions exécutables selon la revendication 9, qui, lorsqu'elles sont exécutées, amènent le processeur à classer le problème moteur en communiquant l'empreinte numérique locale à l'unité de commande ECU distante, et à recevoir le problème moteur en provenance de l'unité de commande ECU distante.

11. Support non transitoire lisible par ordinateur comprenant des instructions exécutables selon la revendication 9, qui, lorsqu'elles sont exécutées, amènent le processeur à :
transmettre le signal de bruit à un système externe et recevoir une seconde empreinte numérique distante en provenance du système externe, sur la base du signal de bruit,
et classer le problème moteur en appliquant l'empreinte numérique locale, l'empreinte numérique distante, la seconde empreinte numérique distante, ou une combinaison de celles-ci.
